# EUROPEAN PATENT SPECIFICATION

(11) **EP 3 434 568 B1**
(45) Date of publication and mention of the grant of the patent: **30.06.2021**
(21) Application number: 18185098.3
(22) Date of filing: 24.07.2018
(51) Int. Cl.: B62J 13/06, B32B 27/32

(54) **CHAIN CASE AND METHOD FOR MANUFACTURING SAME**
KETTENKASTEN UND VERFAHREN ZUR HERSTELLUNG DAVON
CARTER DE CHAÎNE ET SON PROCÉDÉ DE FABRICATION

(30) Priority: 25.07.2017 BE 201705520
(43) Date of publication of application: 30.01.2019
(73) Proprietor: Curana Invest bvba, 8850 Ardooie (BE)
(72) Inventor: VENS, Dirk, 8800 ROESELARE (BE)
(74) Representative: Cardoen, Annelies Andréa C.

(56) References cited:
- EP-A1- 0 343 751
- DE-A1- 3 629 463
- GB-A- 189 721 378
- JP-B2- 3 877 347
- JP-U- S56 124 078
- NL-C- 2 010 239
- US-A1- 2013 337 955

## Description

The present invention concerns a chain case for a bicycle comprising a base element and a covering layer which at least partially covers at least one side of the base element, wherein the base element is made from a layer of foamed plastic.

The present invention also concerns a method for manufacturing such a chain case.

Chain cases may refer to either enclosed chain cases or open chain cases. Open chain cases are also referred to using the term chain guards. There are various types of chain cases. For instance, there are metal chain cases or chain cases made from plastic. The advantage of such chain cases is that they have a certain rigidity and thus strength, as a result of which they guard the chain well during cycling. The drawback is that they form a sound board for the chain. If the chain case is not properly mounted, or moves or deforms after a certain amount of time, the chain may catch against this chain case and cause an irritating noise. An additional drawback is that these chain cases are susceptible to breaking, despite their strength and rigidity. Breakage is usually caused by improper use or improper storage of the bicycle. Bicycles are not always stored properly. For instance, chain cases may become damaged when they are placed in a bicycle rack or during their storage in the bicycle rack. Other bicycles which are placed in the bicycle rack or removed therefrom may catch the chain case. Bicycles may also fall over or other bicycles may be placed against them. The attachment of such rigid chain cases to bicycles is also not simple.

In order to remedy the drawbacks regarding the noise, there are already chain cases which are provided with a covering layer. In that case, these chain cases consist of a rigid frame which is encased by a leather layer, felt, varnished cloth, etc. However, the frame itself is still susceptible to damage and not easy to place around the chain of a bicycle.

JP 3877347 B2 describes a chain case according to the preamble of claim 1. However the installation of this chain case is cumbersome.

It is therefore an object of the invention to manufacture a chain case which is less susceptible to damage, easily attachable to a bicycle and which causes little or no irritating noise.

This object is achieved by providing a chain case for a bicycle comprising a base element and a covering layer which at least partially covers at least one side of the base element, wherein the base element is made from a layer of foamed plastic and wherein one or more locations of the layer of foamed plastic are compressed along a line, such that the thickness of the layer at these one or more locations is thinner, and these one or more locations form folding lines of the chain case. A foamed plastic or a plastic foam is a mixture of different gas bubbles in a plastic. Foamed plastic is produced using a blowing agent and/or a chemical reaction which leads to gasification. Preferably, the foamed plastic has a closed cell structure.

The said side may, for example, be virtually fully covered or, for example, only a part of this side may be covered. For instance, the chain case may, for example, comprise a ring part, which is provided in order to guard the part of the chain at the location of the bottom bracket, and comprise a tail part, which is provided in order to guard the other parts of the chain, wherein in that case, for example, only the ring part or the tail part of the chain case is covered. Since the base element is made from a foamed plastic, the noise of the chain is effectively muffled by the chain case. Moreover, a layer of foamed plastic has a certain pliability and flexibility, as a result of which it is less susceptible to damage when objects catch against the chain case or the bicycle falls onto its chain case. In this case, the chain case may temporarily deform and then later assume its original form, meaning that the risk of damage is limited. The covering layer protects the foamed plastic against scratches or the like and also helps determine the appearance of the chain case. With the aid of the covering layer, the chain case can be configured to have a very aesthetically pleasing appearance. Since the base element is formed from a foamed plastic, the base element can also be compressed. The base element is also light since it is formed from a foamed plastic, meaning that the chain case does not contribute too much to the weight of the bicycle and this chain case is also easily attachable to a bicycle.

In a specific embodiment, the covering layer may encase virtually the entire base element. Preferably, only the sides of the chain case which are provided in order to face away from the chain are covered with the covering layer, since these are the most visible sides during use of a bicycle comprising such a chain case and these sides will also come into contact most with other objects, such as other bicycles. As the base element is pliable, the mounting of the chain case on the bicycle, thus the mounting of the chain case with respect to the chain, is also simple, since it is readily possible to move the chain case into the desired position by bending the chain case.

Preferably, the covering layer is laminated on the base element. By laminating the covering layer on the base element, the covering layer will usually not detach from the base element during the service life of the chain case. In this case, the chain case may then form a single aesthetically pleasing unit. There are various possible ways of lamination. For example, use can be made of a glue. The glue may be a liquid glue, in which case the process is known as wet lamination. It is also possible to use dry lamination. It is also possible to use hot-melt lamination. The hot-melt lamination can take place using only heat and/or use can also be made of a flame.

According to the invention, one or more locations of the layer of foamed plastic are compressed along a line, such that the thickness of the layer at these one or more locations is thinner, and these one or more locations form folding lines of the chain case. In these locations, the foamed layer is preferably virtually permanently compressed. This means that during the service life of the chain case, these locations are always compressed and that this compression is not temporary. Given the pliability of the base element and given that it is made from foamed plastic, other locations may also be compressed temporarily. In order to permanently compress the plastic, use may be made, for example, of thermocompression. The folding lines ensure that the chain case can assume the desired form, is readily placeable around the chain and is able to at least partially encase the chain. During the mounting of this chain case around a chain, the chain case can be folded around the chain using these folding lines. These folding lines thus simplify the installation of the chain case on a bicycle. Since the folding lines ensure that the chain case is foldable at the location of these said locations, it is also possible to transport the chain case unfolded, as a result of which several chain cases are compactly stackable and the required transport volume is limited. The folding lines provide parts of the chain case which can fold with respect to one another. Using folding lines, folding flaps or the like are thus formed. Using these folding lines, it is possible in this case to configure the chain case in one part and yet be able to readily place the chain case around the chain of a bicycle. If the chain case is configured in one part, it is very easily attachable to a bicycle by one person. It is also possible to select the form and placement of these folding lines, so that it is readily possible to provide various types of chain case for various types of bicycle. Given the significant differences between bicycles in terms of chains, gears, drive types, etc., it is useful to readily be able to provide different types of chain case.

Further preferably, a said folding line divides the chain case, at the location of this folding line, into a folding flap and a stationary part, and this folding flap and the stationary part are together provided in order to form a passage through which a chain can travel, and this by rotating this folding flap in the direction of the stationary part. Using this folding flap, it is possible to form a passage for the chain. This means that the chain will be fully encased by the chain case over a certain distance, as a result of which this chain is well guarded/protected by the chain case. In that case, this folding flap is preferably attachable to the stationary part when these together form the passage, in order to prevent the folding flap from rotating away from the stationary part again. For this purpose, the chain case may optionally additionally comprise a second folding line at the location of the said stationary part, which second folding line forms a second folding flap, wherein both folding flaps are then rotatable towards one another and attachable to one another.

In a highly preferred embodiment, the chain case is an enclosed chain case comprising a ring part, provided in order to be attached at the location of the bottom bracket and to guard the part of the chain at the location of the bottom bracket, and two tail parts which merge into the ring part and which are provided in order to together guard the part of the chain which extends next to the bottom bracket, wherein these two tail parts comprise corresponding connecting elements to connect the two tail parts. These two tail parts, together with the ring part, may then form one continuous unit in the mounted position on the bicycle. In this way, it is readily possible to attach an enclosed chain case to a bicycle, since all parts of the chain case are connected and form a single unit. As the base element has a certain flexibility, the ring part and the tail parts can be bent separately, as a result of which the mounting on the bicycle can take place in a very quick and simple manner. In this case, the chain case can be configured in one part, which greatly simplifies the mounting on the bicycle. The two tail parts are further preferably compressed at the location of their said connecting elements, so that the tail parts can be combined at the location of their connecting elements without there being a thickening at the location of the connection between the two tail parts.

Also further preferably, each tail part comprises at least one said folding line which divides the tail part into a folding flap and a stationary part, and wherein this folding flap and the stationary part are together provided in order to form a passage through which a chain can travel, and this by rotating this folding flap in the direction of the stationary part. Each tail part is then able to form a passage through which the chain can travel. Each tail part is then readily able to guard/protect the chain.

The covering layer is preferably made from an elastic material. Since the covering layer has a certain elasticity, this will also be able to bend when forces are exerted on the chain case during use of the bicycle and thus when the base element is bent and thus deformed. The entire chain case is therefore adequately pliable and flexible, as a result of which it is less susceptible to damage.

In a preferred embodiment, the material from which the covering layer is made has an elongation at break in the longitudinal direction which is higher than 50% and/or an elongation at break in the transverse direction which is higher than 150%. This elongation at break may be determined, for example, by ISO 1421. The elongation at break indicates that this material will break only beyond a certain elongation. Given the high elongation at break, this means that this covering layer can be stretched by a certain amount, as a result of which it is extremely suitable to bend together with the base element. Even more preferably, the elongation at break in the longitudinal direction is higher than 60%, and even higher than 70%. Even more preferably, the elongation at break in the transverse direction is higher than 160%, and even higher than 170%. In a specific embodiment, the elongation at break in the longitudinal direction corresponds to the elongation at break in the transverse direction.

Preferably, the material from which the covering layer is made has a tensile strength in the longitudinal direction which is higher than 20 daN/5 cm and/or a tensile strength in the transverse direction which is higher than 15 daN/5 cm. This tensile strength may be determined, for example, by ISO 1421. Even more preferably, the tensile strength in the longitudinal direction is higher than 25 daN/5 cm, even more preferably higher than 30 daN/5 cm. Even more preferably, the tensile strength in the transverse direction is higher than 20 daN/5 cm. The covering layer is in this case sufficiently strong to adequately protect the base element from scratches and the like. In a specific embodiment, the tensile strength in the longitudinal direction corresponds to the tensile strength in the transverse direction.

The material from which the covering layer is made preferably has an elongation of more than 5% on application of a force of 50 N in the longitudinal direction and/or preferably has an elongation of more than 10% on application of a force of 50 N in the transverse direction. This may be determined, for example, by ISO 1421. This means that the covering layer is able to stretch. The material from which the covering layer is made further preferably has an elongation of more than 8% on application of a force of 50 N in the longitudinal direction. The material from which the covering layer is made further preferably has an elongation of more than 13% on application of a force of 50 N in the transverse direction.

Preferably, the thickness of the covering layer is between 0.1 mm and 3 mm. At these thicknesses, the covering layer is sufficiently strong and impenetrable. Further preferably, the thickness of the covering layer is between 0.5 mm and 1.5 mm, even more preferably between 0.8 mm and 1.2 mm

The properties mentioned above also ensure that the chain case can be readily formed. A possible method for forming this chain case will be discussed in further detail in the explanation of the method according to the invention.

In a preferred embodiment, the covering layer is made from a water-repellent material. This water-repellent material is further preferably also a material which is impermeable to water. Since bicycles are exposed to the environment, they may also come into contact with rain. It is therefore better that the covering layer is made from a water-repellent material.

Preferably, the covering layer is substantially made from a plastic material. This plastic material further preferably comprises at least 85% polyvinyl chloride. Possible compositions are, for example, the following: 88-94% polyvinyl chloride, 0.1-2% polyurethane and 4-10% polyamide or 91-97% polyvinyl chloride and 3-9% polyamide. Such plastic materials are sufficiently elastic, strong and water-repellent and are thus a suitable material for the covering layer. They can also be provided in various colours and patterns. Other usable plastic materials comprise polyurethane, synthetic rubber, etc.

In an alternative embodiment, the covering layer is substantially made from an elastic material which is waterproof and/or water-repellent, wherein this elastic material is not a plastic material.

In a highly preferred embodiment, the base element is substantially made from a foamed polyolefin, such as polyethylene. Polyolefins are polymers based on carbon and hydrogen. The most important polyolefins are polyethylene or polyethene (PE), polypropylene or polypropene (PP), polybutylene or poly(l-butene) (PB) and polyisobutylene or polyisobutene (PIB). The polyolefins also include copolymers such as ethylene vinyl acetate (EVA), for example. Foamed polyolefins are pliable and impermeable to water, as a result of which they are highly suitable for manufacturing the base element. Preferably, the foamed polyolefin is foamed polyethylene. This foamed polyethene may, for example, be expanded polyethylene (EPE). This is a non-crosslinked, closed cell foam which is made from low-density polyethylene (LDPE).

However, the base element may also be substantially made from a polyurethane foam or from a mixture of different plastic foams.

Preferably, the chain case comprises closure means, which are attached to the covering layer and/or the base element, for mounting the chain case around the chain. Using the closure means, it is possible to attach certain folding flaps, if present, to other folding flaps or parts of the chain case in order to thus obtain an enclosed chain case which at least partially and preferably substantially encases the chain. Using these closure means, however, it is also possible to attach the chain case, for example the folding flaps if present, to parts of the bicycle. Preferably, the closure means are attached to the covering layer and the base element in such a way that the closure means extend through the covering layer and the base element. Further preferably, the chain case comprises folding flaps, wherein one or more of the closure means are attached to these folding flaps.

The object of the invention is also achieved by providing a method for manufacturing a chain case as disclosed above, wherein a first layer of a foamed plastic and a second layer are provided, at least one side of this first layer is at least partially covered with this second layer to form a covered first layer, after which this covered first layer is formed into one or more chain cases comprising a base element formed from the first layer and comprising a covering layer formed from the second layer. The second layer and the layer of foamed plastic are provided separately here and then combined. After they have been combined, the formation into a chain case takes place. By forming the covered first layer into the chain case and thus not first giving each layer the desired form separately and then connecting them to one another, there is one fewer formation step. In order to be able to properly transform the first covered layer together into a chain case, the second layer preferably has one or more of the possible properties of the covering layer disclosed above. For instance, the second layer is preferably made from an elastic material which comprises a certain strength, elasticity, a thickness between 0.1 mm and 3 mm, etc.

According to the invention, a part of the covered first layer is inserted into a mould, to form one or more chain cases. The covered first layer may already be cut here into the desired dimensions, with the mould then only providing the shape. However, on insertion into the mould or during the formation in the mould, there may be one or more additional cutting actions, with the desired dimensions of the covered first layer being obtained with the aid of the mould. Using a mould, it is simple to provide the covered first layer with the desired shape and thus form a chain case.

Preferably, at least a part of the covered first layer which is inserted into the mould undergoes thermocompression in the mould. With the aid of thermocompression, it is easy to provide the covered first layer with the desired shape and also to form the required folding lines by locally pressing in the layer of foamed plastic, if desired. With the aid of thermocompression, these folding lines will remain present for virtually the entire service life of the chain case. With the aid of thermocompression, it is also possible to provide the covered first layer with the desired dimensions. A mould for thermocompression is also simple to manufacture in comparison with, for example, a mould for injection moulding, as a result of which this method is extremely suitable for manufacturing chain cases. Given that there are all kinds of bicycles with different types of chains, gears and drives, many different embodiments of chain cases are required. In this method, it is easy to provide different moulds for thermocompression and thus different types of chain cases. By selecting thermocompression and the possible formation of folding lines, it is possible here to easily and quickly form a chain case in one part which is easily mountable on a bicycle, without (a large number of) additional processing steps being required, given that the formation of optional folding lines takes place together with the general formation of the chain case.

According to the invention, the at least one part of the covered first layer which is inserted into the mould undergoes compression along a line in one or more locations, by locally compressing the first layer along a line, to form folding lines.

In a preferred embodiment, in order to apply the second layer to the first layer, this second layer is laminated on the first layer.

Preferably, the thickness of the first layer is larger than the thickness of the second layer. The layer of foamed plastic is extremely suitable for formation via a mould and is thus preferably the thickest layer. The thickness of the first layer may, for example, be between 2 mm and 10 mm, while the thickness of the second layer is between 0.2 mm and 1.5 mm.

In a preferred embodiment, after the formation in the mould, closure means are attached to the base element and/or the covering layer. As a result, the chain case is attachable to a bicycle and/or formable into the desired shape and can adequately encase the chain where necessary.

In the following description, chain cases according to the present invention are described in more detail. This description serves only to further explain the features of the invention and can therefore not be seen as a limitation of the scope of protection for the present invention defined in the claims of this patent application or of the area of application thereof.

Reference numerals are used in this description to refer to the attached figures, in which:
- ***Figure** 1* is a perspective view of a chain case according to the invention in unfolded position, wherein the corresponding closure means and the connecting elements are not connected to one another;

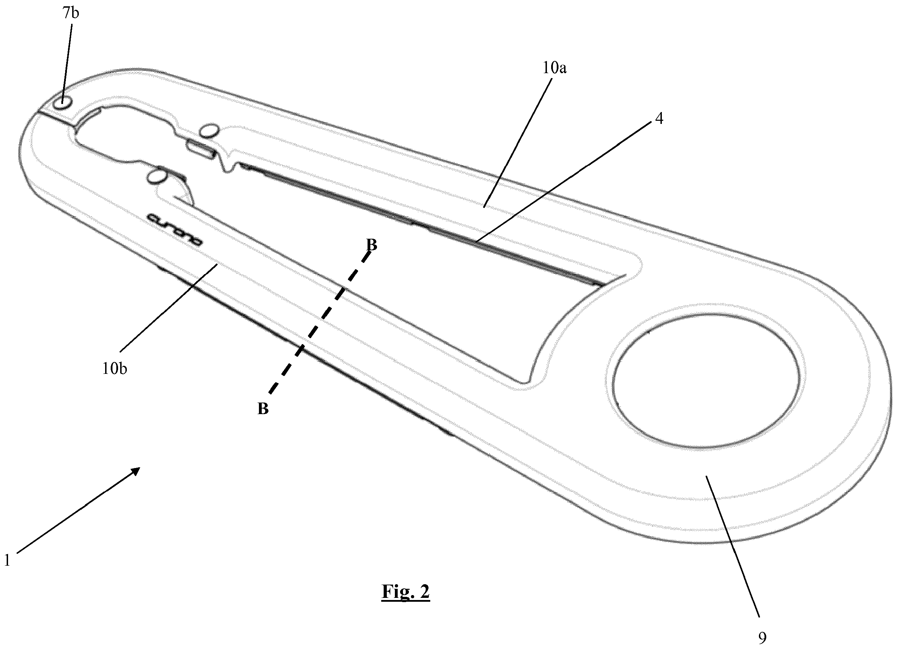

- ***Figure** 2* is a perspective view of the chain case shown in Figure 1 in folded position, wherein the corresponding closure means and the connecting elements are connected to one another;
- ***Figure 3*** is a cross section of the chain case shown in Figure 1 along line A A;
- ***Figure 4*** is a cross section of the chain case shown in Figure 2 along line B B;
- ***Figure 5*** shows a detail of a side view of a bicycle, wherein a chain case as shown in Figures 1 and 2 is mounted on the bicycle.

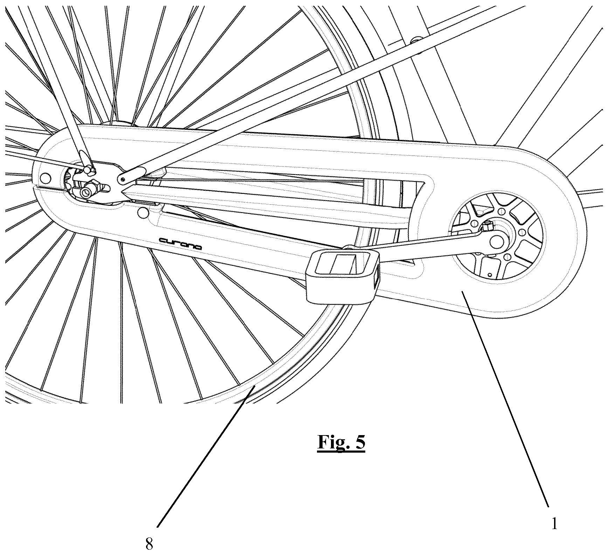

The chain case (1) shown in the figures is an enclosed chain case (1). This means that, in the position mounted on the bicycle (8), this chain case (1) will always at least partially encase and protect/guard the full chain of the bicycle (8). This chain case (1) comprises a base element (2) and a flexible covering layer (3) which is laminated on the sides of the base element (2) which are provided in order to face away from the chain in the mounted position of the chain case (1) on the bicycle (8). This mounted position is visible in Figure 5.

The flexible covering layer (3) is made from an elastic plastic material which comprises at least 85% polyvinyl chloride (PVC). This material can thus be referred to using the term PVC stretch.

The base element (2) is made from a layer of foamed polyethylene, namely expanded polyethylene. This layer is a light water-repellent layer with a certain pliability. The layer provided for forming the base element (2) has the same thickness throughout. During the formation of the chain case (1) (see also below), several locations, certain of which are linear, are compressed. These linear compressed locations form folding lines (4) of the chain cases (1). These folding lines (4) create folding flaps (6) of the chain case (1), which are rotatable about these folding lines (4).

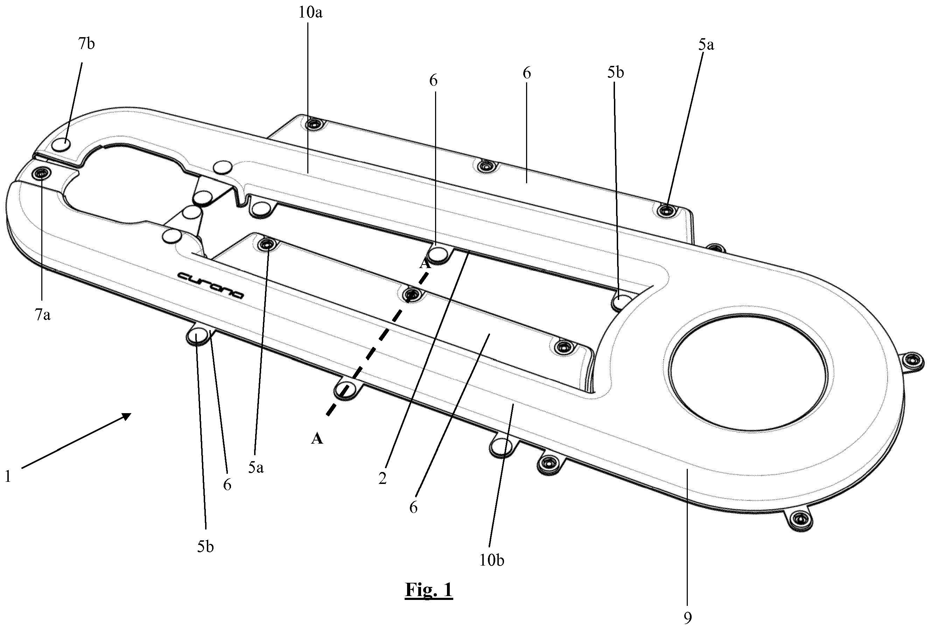

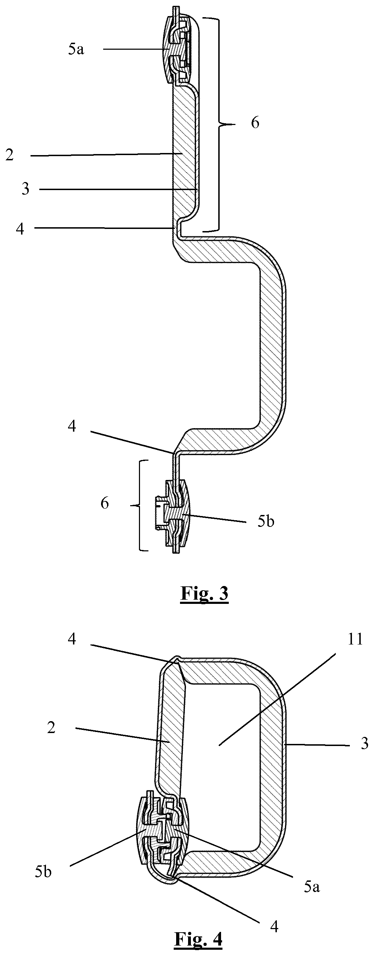

Figures 3 and 4 show the action of such folding flaps (6). Figure 3 shows the unfolded position of these folding flaps (6) and Figure 4 shows the folded position. The chain case (1) is manufactured unfolded (as visible in Figure 1 and Figure 3). In the folded position shown in Figure 4, the folding flaps (6) and the other part of the chain case (1) which is visible in Figure 4 form a passage (11) for the chain of a bicycle (8).

The folding flaps (6) and the other parts of the chain case (1) further comprise corresponding closure means (5a, 5b), so that the folding flaps (6) can be attached to one another in the folded position of the chain case (1).

This chain case (1) consists of 3 large visible parts, namely the ring part (9) provided in order to be attached at the location of the bottom bracket and to guard the part of the chain which is located at the bottom bracket, and two tail parts (10, 10b) which merge into the ring part (9) and which are provided in order to together guard the part of the chain which extends next to the bottom bracket. These two tail parts (10, 10b) further comprise corresponding connecting elements (7a, 7b), so that these two tail parts (10, 10b) together with the ring part (9) form one continuous unit in the mounted position on the bicycle (8).

In order to be able to mount the chain case (1) around the chain of a bicycle (8), the chain case (1) is brought into the unfolded position at the location of the chain. Then, the ring part (9) is placed around the bottom bracket, the folding flaps (6) are folded around the chain and the corresponding closure means (5a, 5b) are connected to one another. Eventually, the corresponding connecting elements (7a, 7b) are therefore connected to one another. This is all done very smoothly and quickly since the different parts of the chain case (1) are flexible as they all comprise a piece of the base element (2).

This chain case (1) can be formed as follows: First, a first layer of foamed polyethylene is provided and a PVC stretch. One side of this first layer is laminated with this PVC stretch. After this, a part of this covered first layer is placed into a mould and this part undergoes thermocompression. During this thermocompression, there are cutting actions, forming actions and compression actions which result in a chain case (1) having the desired form and folding lines (4) and folding flaps (6) and comprising a base element (2) made from this first layer and a covering layer (3) made from this PVC stretch. Closure means (5a, 5b) are then connected to the folding flaps (6) and connecting elements (7a, 7b) are connected to each of the two tail parts (10a, 10b), eventually resulting in a chain case (1) as shown in the figures.

## Claims

1. Chain case (1) for a bicycle comprising a base element (2) and a covering layer (3) which at least partially covers at least one side of the base element (2), wherein the base element (2) is made from a layer of foamed plastic, **characterized in that** one or more locations of the layer of foamed plastic are compressed along a line, such that the thickness of the layer at these one or more locations is thinner, and these one or more locations form folding lines (4) of the chain case (1) .

2. Chain case (1) according to Claim 1, **characterized in that** the covering layer (3) is laminated on the base element (2).

3. Chain case (1) according to Claim 1 or 2, **characterized in that** a said folding line (4) divides the chain case (1), at the location of this folding line (4), into a folding flap (6) and a stationary part, and **in that** this folding flap (6) and the stationary part are together provided in order to form a passage (11) through which a chain can travel, and this by rotating this folding flap (6) in the direction of the stationary part.

4. Chain case (1) according to one of the preceding claims, **characterized in that** the chain case (1) is an enclosed chain case (1) comprising a ring part (9), provided in order to be attached at the location of the bottom bracket and to guard the part of the chain at the location of the bottom bracket, and two tail parts (10, 10b) which merge into the ring part (9) and which are provided in order to together guard the part of the chain which extends next to the bottom bracket, wherein these two tail parts (10, 10b) comprise corresponding connecting elements (7a, 7b) to connect these two tail parts (10a, 10b) when mounting the chain case (1) around the chain of a bicycle (8).

5. Chain case (1) according to Claims 3 and 4, **characterized in that** each tail part (10a, 10b) comprises at least one said folding line (4) which divides the tail part (10a, 10b) into a folding flap (6) and a stationary part, and **in that** this folding flap (6) and the stationary part are together provided in order to form a passage (11) through which a chain can travel, and this by rotating this folding flap (6) in the direction of the stationary part.

6. Chain case (1) according to one of the preceding claims, **characterized in that** the covering layer (3) is made from an elastic material.

7. Chain case (1) according to one of the preceding claims, **characterized in that** the base element (2) is substantially made from a foamed polyolefin.

8. Chain case (1) according to one of the preceding claims, **characterized in that** the chain case (1) comprises closure means (5a, 5b), which are attached to the covering layer (3) and/or the base element (2), for mounting the chain case (1) around the chain of a bicycle (8).

9. Method for manufacturing a chain case (1) as disclosed in one or more of Claims 1 to 8, **characterized in that** a first layer of a foamed plastic and a second layer are provided, at least one side of this first layer is at least partially covered with this second layer (3) to form a covered first layer, after which this covered first layer is formed into one or more chain cases (1) comprising a base element (2) formed from the first layer and comprising a covering layer (3) formed from the second layer, wherein least a part of the covered first layer is inserted into a mould, to form one or more chain cases (1), and wherein the at least one part of the covered first layer which is inserted into the mould, undergoes compression along a line in one or more locations, by locally compressing the first layer along a line, to form folding lines (4).

10. Method according to Claim 9, **characterized in that** at least a part of the covered first layer which is inserted into the mould undergoes, thermocompression in the mould.

11. Method according to one of Claims 9 or 10, **characterized in that** in order to apply the second layer to the first layer, this second layer is laminated on the first layer.

12. Method according to one of Claims 9 to 11, **characterized in that** after the formation in the mould, closure means (5a, 5b) are attached to the base element (2) and/or the covering layer (3).

## Patentansprüche

1. Kettenkasten (1) für ein Fahrrad, umfassend ein Basiselement (2) und eine Decklage (3), die wenigstens eine Seite des Basiselements (2) wenigstens teilweise bedeckt, wobei das Basiselement (2) aus einer Lage aus geschäumtem Kunststoff gebildet ist, **dadurch gekennzeichnet, dass** eine oder mehrere Stellen der Lage von geschäumtem Kunststoff entlang einer Linie komprimiert sind, so dass die Dicke der Lage an der einen oder mehreren Stellen dünner ist und die eine oder mehreren Stellen Faltlinien (4) des Kettenkastens (1) bilden.

2. Kettenkasten (1) gemäß Anspruch 1, **dadurch gekennzeichnet, dass** die Decklage (3) auf das Basiselement (2) laminiert ist.

3. Kettenkasten (1) gemäß Anspruch 1 oder 2, **dadurch gekennzeichnet, dass** die Faltlinie (4) den Kettenkasten (1) an der Stelle der Faltlinie (4) in eine Faltklappe (6) und einen stationären Teil teilt und dass die Faltklappe (6) und der stationäre Teil zusammen bereitgestellt sind, um einen Durchgang (11) zu bilden, durch den sich eine Kette bewegen kann, und dies durch Drehen der Faltklappe (6) in die Richtung des stationären Teils.

4. Kettenkasten (1) gemäß einem der vorstehenden Ansprüche, **dadurch gekennzeichnet, dass** der Kettenkasten (1) ein geschlossener Kettenkasten (1) ist, der einen Ringteil (9) umfasst, der bereitgestellt ist, um an der Stelle des Tretlagers angebracht zu werden und den Teil der Kette an der Stelle des Tretlagers zu schützen, und zwei Heckteile (10, 10b), die sich in dem Ringteil (9) vereinigen und die bereitgestellt sind, um gemeinsam den Teil der Kette zu schützen, der nahe des Tretlagers verläuft, wobei die beiden Heckteile (10, 10b) entsprechende Verbindungselemente (7a, 7b) umfassen, um die beiden Heckteile (10a, 10b) bei Anbringen des Kettenkastens (1) um die Kette eines Fahrrads (8) zu verbinden.

5. Kettenkasten (1) gemäß Ansprüchen 3 und 4, **dadurch gekennzeichnet, dass** jeder Heckteil (10a, 10b) wenigstens eine der Faltlinien (4) umfasst, die den Heckteil (10a, 10b) in eine Faltklappe (6) und einen stationären Teil teilt, und dass die Faltklappe (6) und der stationäre Teil zusammen bereitgestellt sind, um einen Durchgang (11) zu bilden, durch den sich eine Kette bewegen kann, und dies durch Drehen der Faltklappe (6) in die Richtung des stationären Teils.

6. Kettenkasten (1) gemäß einem der vorstehenden Ansprüche, **dadurch gekennzeichnet, dass** die Decklage (3) aus einem elastischen Material gebildet ist.

7. Kettenkasten (1) gemäß einem der vorstehenden Ansprüche, **dadurch gekennzeichnet, dass** das Basiselement (2) im Wesentlichen aus einem geschäumten Polyolefin gebildet ist.

8. Kettenkasten (1) gemäß einem der vorstehenden Ansprüche, **dadurch gekennzeichnet, dass** der Kettenkasten (1) Verschlusseinrichtungen (5a, 5b) umfasst, die an der Decklage (3) und/oder dem Basiselement (2) befestigt sind, um den Kettenkasten (1) um die Kette eines Fahrrads (8) anzubringen.

9. Verfahren zur Herstellung eines Kettenkastens (1) gemäß einem oder mehreren der Ansprüche 1 bis 8, **dadurch gekennzeichnet, dass** eine erste Lage aus einem geschäumten Kunststoff und eine zweite Lage bereitgestellt werden, wobei wenigstens eine Seite der ersten Lage wenigstens teilweise von der zweiten Lage (3) bedeckt wird, um eine bedeckte erste Lage zu bilden, wonach die bedeckte erste Lage zu einem oder mehreren Kettenkästen (1) geformt wird, die ein Basiselement, das aus der ersten Lage gebildet ist, und eine Decklage (3), die aus der zweiten Lage gebildet ist, umfassen, wobei wenigstens ein Teil der bedeckten ersten Lage in ein Formwerkzeug eingeführt wird, um einen oder mehrere Kettenkästen (1) zu formen, und wobei der wenigstens eine Teil der bedeckten ersten Lage, die in das Formwerkzeug eingeführt wird, an einer oder mehreren Stellen Kompression entlang einer Linie erfährt, indem die erste Lage lokal entlang einer Linie komprimiert wird, um Faltlinien (4) zu bilden.

10. Verfahren gemäß Anspruch 9, **dadurch gekennzeichnet, dass** wenigstens ein Teil der bedeckten ersten Lage, die in das Formwerkzeug eingeführt wird, Wärmekompression in dem Formwerkzeug erfährt.

11. Verfahren gemäß einem der Ansprüche 9 oder 10, **dadurch gekennzeichnet, dass** zum Aufbringen der zweiten Lage auf die erste Lage die zweite Lage auf die erste Lage laminiert wird.

12. Verfahren gemäß einem der Ansprüche 9 bis 11, **dadurch gekennzeichnet, dass** nach dem Formen in dem Formwerkzeug Verschlusseinrichtungen (5a, 5b) an dem Basiselement (2) und/oder der Decklage (3) angebracht werden.

## Revendications

1. Carter de chaîne (1) pour une bicyclette comprenant un élément de base (2) et une couche de revêtement (3) qui recouvre au moins partiellement au moins un côté de l'élément de base (2), l'élément de base (2) étant fabriqué à partir d'une couche de mousse plastique, **caractérisé en ce qu'**un ou plusieurs emplacements de la couche de mousse plastique sont comprimés le long d'une ligne, de telle sorte que l'épaisseur de la couche à cet emplacement ou ces emplacements est plus mince, et cet emplacement ou ces emplacements forment des lignes de pli (4) du carter de chaîne (1).

2. Carter de chaîne (1) selon la revendication 1, **caractérisé en ce que** la couche de revêtement (3) est stratifiée sur l'élément de base (2).

3. Carter de chaîne (1) selon la revendication 1 ou 2, **caractérisé en ce qu'**une dite ligne de pli (4) divise le carter de chaîne (1), à l'emplacement de cette ligne de pli (4), en un rabat pliant (6) et une partie stationnaire, et **en ce que** ce rabat pliant (6) et la partie stationnaire sont prévus ensemble pour former un passage (11) à travers lequel peut se déplacer une chaîne, et ceci par rotation de ce rabat pliant (6) dans la direction de la partie stationnaire.

4. Carter de chaîne (1) selon une des revendications précédentes, **caractérisé en ce que** le carter de chaîne (1) est un carter de chaîne fermé (1) comprenant une partie annulaire (9), prévue pour être attachée à l'emplacement du pédalier et pour protéger la partie de la chaîne à l'emplacement du pédalier, et deux parties de queue (10, 10b) qui fusionnent en la partie annulaire (9) et qui sont prévues pour protéger ensemble la partie de la chaîne qui s'étend à côté du pédalier, ces deux parties de queue (10, 10b) comprenant des éléments de raccordement correspondants (7a, 7b) pour raccorder ces deux parties de queue (10a, 10b) lors du montage du carter de chaîne (1) autour de la chaîne d'une bicyclette (8).

5. Carter de chaîne (1) selon les revendications 3 et 4, **caractérisé en ce que** chaque partie de queue (10a, 10b) comprend au moins une dite ligne de pli (4) qui divise la partie de queue (10a, 10b) en un rabat pliant (6) et une partie stationnaire, et **en ce que** ce rabat pliant (6) et la partie stationnaire sont prévus ensemble pour former un passage (11) à travers lequel peut se déplacer une chaîne, et ceci par rotation de ce rabat pliant (6) dans la direction de la partie stationnaire.

6. Carter de chaîne (1) selon une des revendications précédentes, **caractérisé en ce que** la couche de revêtement (3) est fabriquée à partir d'un matériau élastique.

7. Carter de chaîne (1) selon une des revendications précédentes, **caractérisé en ce que** l'élément de base (2) est fabriqué en grande partie à partir d'une mousse de polyoléfine.

8. Carter de chaîne (1) selon une des revendications précédentes, **caractérisé en ce que** le carter de chaîne (1) comprend des moyens de fermeture (5a, 5b), qui sont attachés à la couche de revêtement (3) et/ou à l'élément de base (2), pour monter le carter de chaîne (1) autour de la chaîne d'une bicyclette (8).

9. Procédé de fabrication d'un carter de chaîne (1) tel que décrit dans une ou plusieurs des revendications 1 à 8, **caractérisé en ce qu'**une première couche d'une mousse plastique et une deuxième couche sont obtenues, au moins un côté de cette première couche est au moins partiellement recouvert avec cette deuxième couche (3) pour former une première couche recouverte, après quoi cette première couche recouverte est façonnée en un ou plusieurs carters de chaîne (1) comprenant un élément de base (2) formé à partir de la première couche et comprenant une couche de revêtement (3) formée à partir de la deuxième couche, dans lequel au moins une partie de la première couche recouverte est insérée dans un moule, pour former un ou plusieurs carters de chaîne (1), et dans lequel l'au moins une partie de la première couche recouverte qui est insérée dans le moule subit une compression le long d'une ligne à un ou plusieurs emplacements, par compression locale de la première couche le long d'une ligne, pour former des lignes de pli (4) .

10. Procédé selon la revendication 9, **caractérisé en ce qu'**au moins une partie de la première couche recouverte qui est insérée dans le moule subit une thermocompression dans le moule.

11. Procédé selon une des revendications 9 et 10, **caractérisé en ce que**, afin d'appliquer la deuxième couche à la première couche, cette deuxième couche est stratifiée sur la première couche.

12. Procédé selon une des revendications 9 à 11, **caractérisé en ce que**, après la formation dans le moule, des moyens de fermeture (5a, 5b)sont attachés à l'élément de base (2) et/ou à la couche de revêtement (3).
